# EUROPÄISCHE PATENTSCHRIFT

(11) **EP 0 332 854 B1**
(45) Veröffentlichungstag und Bekanntmachung des Hinweises auf die Patenterteilung: **01.09.1993**
(21) Anmeldenummer: 89102433.3
(22) Anmeldetag: 13.02.1989
(51) Int. Cl.: B61H 13/02, B60T 8/18

(54) **Bremsventil, insbesondere ein Führerbremsventil und ein lastabhängiges Bremsventil zur Steuerung des Bremsleitungsdruckes**
Driver brake valve and load-responsive valve for the control of the pressure in the brake circuit
Robinet de conducteur et valve de freinage en fonction de la charge pour commander la pression de freinage

(30) Priorität: 15.03.1988 CH 979/88
(43) Veröffentlichungstag der Anmeldung: 20.09.1989
(73) Patentinhaber: Oerlikon-Knorr Eisenbahntechnik AG, 8050 Zürich (CH)
(72) Erfinder: Thoeny, Riet, CH-8152 Glattbrugg (CH); Deutsch, Heinz, CH-8600 Dübendorf (CH); Malina, Alan, CH-8302 Kloten (CH)
(74) Vertreter: Hohn, Max Günter, Dipl.-Ing.

(56) Entgegenhaltungen:
- EP-A- 0 014 486
- CH-A- 594 520
- GB-A- 743 155
- GB-A- 2 022 206

## Beschreibung

Die Erfindung betrifft ein Bremsventil nach dem Gattungsbegriff des Patentanspruches 1.

Bei einem Bremsventil der gattungsgemäßen Art (GB-A-2 022 206), welches in hydraulichen Bremssystemen wirkt, ist ein Bremshebel vorgesehen, mit welchem die wirksamen Hebelarmlängen eines Hebels einstellbar sind; der Hebel stützt sich an einer in einer Langloch-Kulissenführung durch den Bremshebel verschiebbaren Rolle ab und dient an seinen beiden Enden zur Abstützung zweier Stössel. Der eine Stössel ist als Ventilstössel eines Steuerventils ausgebildet und vom ausgesteuerten hydraulischen Bremsdruck beaufschlagbar, während der andere Stössel vom hydraulischen Geberdruck beaufschlagbar ist und als Führung für eine gleichfalls gegenüber dem Hebel wirkende Feder dient. Durch den hinsichtlich seiner Hebelarmlängen variabel am Bremshebel abgestützten Hebel und mit Hilfe der Feder ist ein proportional es Aussteuern des hydraulischen Bremsdruckes nach Maßgabe des hydraulischen Geberdruckes möglich.

Bremsventile der genannten Art sind insbesondere für hydraulische Anlagen geeignet, die baulichen Gegebenheiten machen eine Anwendung bei Druckluftbremsen problematisch, da die wie jeweils bestehenden Flächenverhältnisse größer zu dimensionieren sind. Im übrigen ist der zum Verschieben des Bremshebels dienende Winkel- und Kulissenmechanisnus wegen des bestehenden Übersetzungsverhältnisses und der an der Kulissenführung vorliegenden Reibung Problemen der genauen Einstellung ausgesetzt. Die Verwendung als Führerbremsventil, insbesondere zur Steuerung des Bremsleitungsdruckes an Druckluftbremsen, ist bei derartigen Bremsventilen nicht vorgesehen.

Bei einem weiteren Bremsventil bekannter Konstruktion (DE-C-1 029 856) ist ein nach unten offener, glockenförmiger Körper in einem Gehäuse drehbar gelagert. Am oberen, aus dem Gehäuse herausragenden Ende des Körpers, ist ein Führerhebel befestigt. Ferner ist in dieses Ende ein eine Kappe tragender Bolzen eingeschraubt, der an seinem unteren Ende einen gegen eine Schraubenfeder drückenden Teller trägt. Das untere Ende der Feder liegt am tellerförmigen Ende eines axial durchbohrten, an einer Membrane befestigten Ventilkörper an. Gegen das untere Ende dieses Ventilkörpers wird durch eine zweite Feder ein Ventilteller gedrückt, der bei sich nach oben verschiebendem Ventilkörper auf einem durch eine Trennwand des Gehäuses gebildeter Ventilsitz zum Aufliegen kommt. Das untere Ende des glockenförmigen Körpers ist mit einem in eine Ausnehmung im Gehäuse greifenden Flansch versehen. Die obere Begrenzung dieser Ausnehmung bildet einen Teil einer Schraubenfläche, gegen die der Flansch des Körpers durch die Feder gedrückt wird. Mit dieser Vorrichtung kann die Feder gespannt und entspannt werden, wobei der Bremsleitungsdruck jeweils proportional zur Federspannung ist.

Diese Vorrichtung eignet sich für indirekt wirkende Bremsen mit verhältnismäßig kleinem Druckbereich zwischen beispielsweise 3 - 5 bar, d.h. der Steuerdruck soll von maximal 5 bar auf 3 bar abgesenkt und wieder von 3 bar auf 5 bar angehoben werden können. Falls jedoch bei direkt wirkenden Bremsen der Druck von 0 bar bis auf 5 bar angehoben und von 5 bar wieder bis auf 0 bar abgesenkt werden soll, dann eignet sich das erwähnte Führerbremsventil nicht, da dann das Gewinde zum Einstellen des glockenförmigen Körpers zu steil wird und nicht mehr selbsthemmend ausgebildet werden kann.

Davon ausgehend besteht die Aufgabe der vorliegenden Erfindung darin, ein Bremsventil der gattungsgemäßen Art mit baulich einfachen Mitteln so auszugestalten, daß der Druck in der Bremsleitung über einen verhältnismäßig großen Druckbereich steuerbar ist, ohne daß Kräfte auf den Führerhebel bzw. den lastabhängig verstellbaren Hebel wirksam werden, derart, daß das Betätigen des Führerhebels bzw. lastabhängig verschwenkbaren Hebels wenig Kraft erfordert.

Zur Lösung dieser Aufgabe dienen die Merkmale nach dem Kennzeichnungsteil des Patentanspruches 1.

Das Bremsventil eigent sich insbesondere als Führerbremsventil sowohl für direkt wirkende als auch für indirekt wirkende Druckluftbremsen. Es eignet sich fernerhin als lastabhängiges Bremsventil, z.B. für Güterwagen, wobei das Bremsventil durch die Einfederung der Wagenfedern gesteuert, also lastabhängig beeinflußt wird.

Vorteilhafte Ausgestaltungen und Weiterbildungen sind in weiteren Patentansprüchen aufgeführt.

Zwei Ausführungsbeispiele des erfindungsgemäßen Bremsventiles sind im folgenden anhand der beigefügten Zeichnung beschrieben. Es zeigt :
- Fig. 1: eine schematische Darstellung eines Führerbremsventiles; und
- Fig.2: eine schematische Darstellung eines lastabhängigen Bremsventiles.

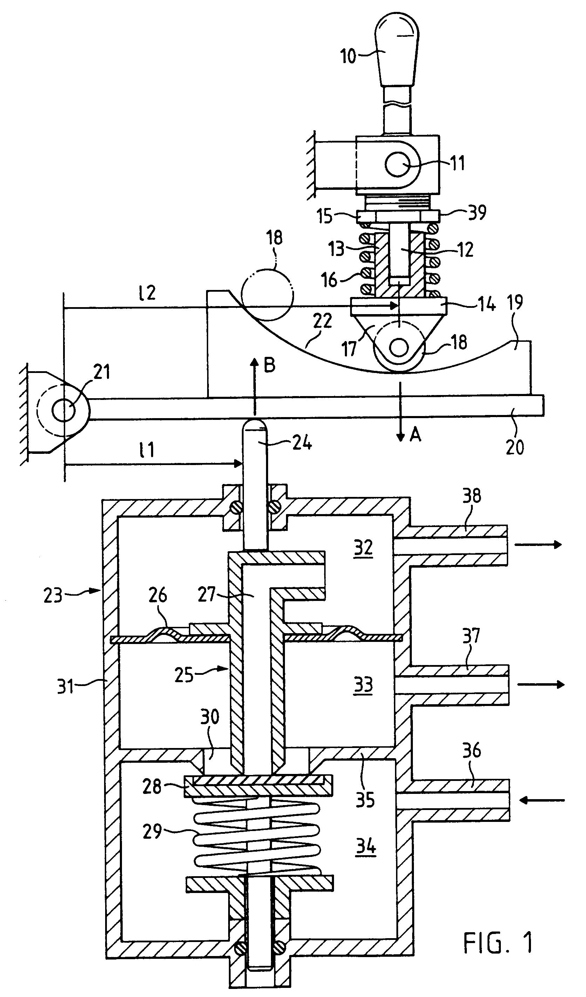

Gemäss Fig.1 ist ein von Hand betätigbarer Führerhebel 10 um eine Achse 11 schwenkbar geLagert. Die Achse 11 ist in einem nicht dargestellten Gehäuse ortsfest angeordnet. Der Führerhebei 10 weist eine Stange 12 auf, welche in eine Hülse 13 hineinragt. Die Hülse 13 ist gegenüber der Stange 12 verschiebbar. An der Hülse 13 und auch an der Stange 12 ist je ein Teller 14 bzw. 15 befestigt. Eine Feder 16, welche sich einerseits am Teller 14 der Hülse 13 und andererseits am Teller 15 der Stange 12 abstützt, hat das Bestreben, die Hülse 13 gegenüber der Stange 12 zu verschieben. Am Teller 14 ist über eine Gabel 17 eine Rolle 18 drehbar gelagert. Diese Rolle 18 stützt sich auf einer Kulisse 19 ab, welche an einem Hebel 20 befestigt ist. Der Hebel 20 ist um eine Achse 21 schwenkbar gelagert. Die Achse 21 ist in dem erwähnten, nicht dargestellten Gehäuse, ortsfest angeordnet. Die Kulisse 19 weist eine gewölbte Stützfläche 22 auf. Das Zentrum dieser kreisbogenförmigen Stützfläche fällt mit der Achse 11 des Führerhebels 10 zusammen. Dadurch wird erreicht, dass beim Verschwenken des Führerhebels 10 die Rolle 18 auf der Stützfläche 22 abrollt, ohne dass sich dabei die Hülse 13 gegenüber der Stange 12 verschiebt; somit wird bei dieser Verschwenkung des Führerhebels 10 die Feder 16 weder komprimiert noch entspannt, d.h. ihre Kraft auf den Hebel 20 bleibt konstant. Der Hebel 20 stützt sich seinerseits an einem Stössel 24 eines Steuerventiles 23 im Abstand l1 von der Achse 21 ab. Am Stössel 24 ist ein Ventilkörper 25 befestigt, auf dem sich eine Membrane 26 abstützt. Das untere Ende des Stössels 24 weist eine axiale Bohrung 27 auf und stützt sich auf einem Ventilteller 28 ab. Der Ventilteller 28 wird durch eine zweite Feder 29 gegen einen ortsfesten Ventilsitz 30 angedrückt. Sowohl die Membrane 26 als auch der Ventilsitz 30 sind in einem Gehäuse 31 befestigt, das in drei Kammern 32,33 und 34 unterteilt ist. Die beiden Kammern 32 und 33 sind durch die Membrane 26 voneinander getrennt und die beiden Kammern 33 und 34 sind durch eine Wand 35 voneinander getrennt, an der sich der Ventilsitz 30 befindet. Die unterste Kammer 34 ist an eine Speiseleitung 36 angeschlossen, die mittlere Kammer 33 ist an eine Bremsleitung 37 angeschlossen und die obere Kammer 32 ist an eine Entlüftungsleitung 38 angeschlossen. In der gezeigten Mittelstellung des Ventilkörpers 25 ist die axiale Bohrung 27 des Stössels 24 durch den Ventilteller 28 verschlossen und dieser Ventilteller 28 liegt auch am Ventilsitz 30 an, derart dass keine Luft aus der unteren Kammer 34 in die mittlere Kammer 33 strömen kann. Wird der Stössel 24 aus dieser Stellung angehoben, dann kann Luft aus der Kammer 33 durch die Bohrung 27 in die Kammer 32 und aus dieser durch die Entlüftungsleitung 38 entweichen. Wird der Stössel 24 aus dieser Mittelstellung gesenkt, dann kann Luft aus der Kammer 34 in die Kammer 33 strömen, da der Teller 28 nicht mehr am Ventilsitz 30 anliegt. Eine Schraube 39 ermöglicht es, die Vorspannung der ersten Feder 16 auf den gewünschten Wert einzustellen.

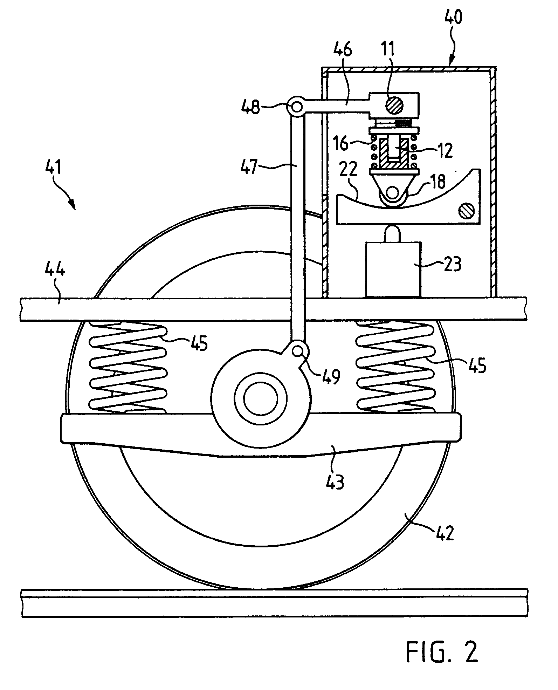

Die Wirkungsweise der beschriebenen Führerbremsventileinrichtung ist wie folgt:
In der gezeigten Stellung des Stössels 24 mit dem daran befestigten Ventilkörper 25 sind sämtliche Kräfte, die auf diesen Stössel 24 wirken, im Gleichgewicht. In der Kammer 33 herrscht ein einstellbarer Druck entsprechend der gewünschten Bremskraft. In der entlüfteten Kammer 32 herrscht immer Atmosphärendruck und in der untersten Kammer 34 herrscht immer Betriebsdruck. Der einstellbare Druck in der Kammer 33 wirkt auf den Ventilkörper 25 und auf die Membrane 26 und hat das Bestreben, den Stössel 24 gegen den Hebel 20 zu drücken. Der Betriebsdruck in der Kammer 34 wirkt auf den Ventilteller 28 und hat das Bestreben, diesen Ventilteller 28 gegen den Ventilsitz 30 zu drücken und dabei die Wirkung der Zweiten Feder 29 zu unterstützen. Auf den Hebel 20 wirkt ferner die Kraft der Feder 16. Die Länge des Hebelarmes, mit dem diese Kraft der Feder 16 auf den Hebel 20 wirkt, läßt sich jedoch durch Verschwenken des Führerhebels 10 verändern; dabei bleibt jedoch die Kraft der Feder 16 kostant, da - wie bereits gesagt - durch die Verschwenkung des Führerhebels 10 die Feder 16 weder komprimiert noch entspannt wird. Diese konstante Kraft der Feder 16 zusammen mit der veränderlichen wirksamen Hebelarmlänge 1₂ bewirkt ein unterschiedliches Drehmoment auf den Hebel 20. Durch Verschwenken des Führerhebels 10 im Uhrzeigersinne kann dieses Drehmoment verkleinert werden und durch Verschwenken des Führerhebels 10 im Gegenuhrzeigersinne kann dieses Drehmoment vergrößert werden. Sobald die Kraft der Feder 16 gegen die Achse 21 gerichtet ist, wird das Drehmoment verschwinden und ebenso die Bremskraft. Diese Stellung ist gestrichelt angedeutet. Der veränderliche Druck in der Kammer 33 kann somit allein durch Verändern der Hebelarmlängen 1₂ von einem Minimalwert auf einen Maximalwert eingesteuert werden. Dabei wird sich die Stellung des Hebels 20 nicht verändern, denn sobald alle Kräfte nach einem Verschwenken des Führerhebels 10 wieder im Gleichgewicht sind, nimmt der Hebel 20 wieder seine in der Zeichnung gezeigte Stellung ein. Bei einer Verschwenkung des Führerhebels 10 im Uhrzeigersinne wird sich somit der Druck in der Kammer 33 verkleinern, indem der Stössel 24 zuerst angehoben wird, wobei sich die Feder 16 etwas komprimiert. Dabei strömt Druckluft aus der Kammer 33 durch die axiale Bohrung 27 in die Kammer 32 und durch die Entlüftungsleitung 38 ins Freie. Sobald wieder Gleichgewicht herrscht, wird die Feder 16 den Stössel 24 in seine Ausgangslage zurückschieben. Bei einer Verschwenkung des Führerhebels 10 im Gegenuhrzeigersinne wird sich somit der Druck in der Kammer 33 vergrössern, indem der Stössel 24 zuerst abgesenkt wird, wobei sich die Feder 16 etwas entspannt. Dabei strömt Druckluft aus der untersten Kammer 34 in die Kammer 33, da beim Absenken des Stössels 24 der Ventilteller 28 von seinem Ventilsitz 30 abgehoben wird, wodurch der Druck in der Kammer 33 steigt. Sobald wieder Gleichgewicht herrscht, wird die Feder 16 komprimiert und der Stössel 24 gelangt in seine Ausgangslage. Mit Hilfe der Schraube 39 kann die Vorspannung der Feder 16 - und damit auch der Druck in der Kammer 33 - auf den gewünschten Wert eingestellt werden. Gemäss Fig.2 befindet sich ein lastabhängiges Bremsventil 40 auf einem Fahrzeug 41, von dem im wesentlichen bloss das Fahrgestell angedeutet ist. Ein Rad 42 des Fahrgestelles ist an einem Balken 43 drehbar gelagert. Auf diesem Balken 43 stützt sich eine Ladebrücke 44 über zwei starke Wagenfedern 45 ab. Das lastabhängige Bremsventil 40 ist auf der Ladebrücke 44 befestigt. An der Achse 11 dieses Bremsventiles 40 ist ein Hebel 46 starr befestigt und über eine Stange 47 gelenkig mit dem Balken 43 verbunden. Diese Stange 46 ist über ein erstes Gelenk 48 mit dem Hebel 46 und über ein zweites Gelenk 49 mit dem Balken 43 verbunden. Bei der Belastung des Fahrzeuges 41 werden die beiden Federn 45 komprimiert, dabei senkt sich die Ladebrücke 44 gegen den Balken 43 und dadurch ist die Stange 47 in der Lage, den Hebel 46 zu verschwenken und somit die Achse 11 zu drehen. Aus Fig.2 ist ersichtlich, dass beim Beladen des Fahrzeuges der Hebel 46 im Uhrzeigersinne geschwenkt wird und dass beim Entladen des Fahrzeuges dieser Hebel 46 im Gegenuhrzeigersinne geschwenkt wird. Somit lässt sich die Bremskraft in Abhängigkeit der Fahrzeugbelastung steuern. Beim Verschwenken des Hebels 46 dreht sich auch die Achse 11 und somit wird auch die Stange 12 geschwenkt und die Rolle 18 rollt auf der Stützfläche 22 ab. Dieses zweite Ausführungsbeispiel des Bremsventiles unterscheidet sich somit nur dadurch, dass statt des von Hand betätigbaren Führerhebels oder Bremshebels 10 ein durch die Einfederung des Fahrzeuges betätigbarer Hebel 46 verwendet wird.

Die Verwendung des erfindungsgemässen Bremsventiles als lastabhängiges Bremsventil gemäss Fig.2 hat den Vorteil, dass dieses Bremsventil der Federcharakteristik der Wagenfedern angepasst werden kann. Die Form der Stützfläche 22 gemäss Fig.1 kann dann der Federcharakteristik der Wagenfedern angepasst werden.

Selbstverständlich eignet sich das anhand zweier Ausführungsbeispiele beschriebene Bremsventil sowohl für indirekt wirkende als auch für direkt wirkende Druckluftbremsen. Im einen Falle muss der Bremsleitungsdruck zum Bremsen abgesenkt und im anderen Falle angehoben werden.

## Patentansprüche

1. Bremsventil, insbesondere Führerbremsventil bzw. lastabhängiges Bremsventil zur Steuerung des Bremsleitungsdruckes an Druckluftbremsen, mit einem manuell bzw. lastabhängig verschwenkbaren Bremshebel (10,46), mit einer Feder (16), deren Kraft proportional zum Bremsleitungsdruck wirkt, und mit einem gegenüber einem Steuerventil (23) wirkenden Hebel (20), dessen wirksame Hebelarmlängen (1₁,1₂) durch den Bremshebel (10,46) einstellbar sind, wobei sich auf dem genannten Hebel (20) einerseits ein Ventilstössel (24) des Steuerventils (23) und andererseits der Bremshebel (10,46) abstützen, derart, daß mit Hilfe des Hebels (20) das Verhältnis zwischen der Kraft (A) der Feder (16) und der durch den Bremsleitungsdruck bewirkten Kraft (B) steuerbar ist, dadurch gekennzeichnet, daß sich die Feder (16) über eine Rolle (18) des Bremshebels (10,46) auf dem Hebel (20) abstützt, wobei durch Verschwenken des Bremshebels (10,46) der Ort des Rollenstützpunktes auf dem Hebel (20) und somit die wirksamen Hebelarmlängen (1₁,1₂) einstellbar sind.

2. Bremsventil nach Anspruch 1, dadurch gekennzeichnet, daß sich die Rolle (18) auf einer kreisbogenförmigen Stützfläche (22) einer am Hebel (20) befestigten Kulisse (19) abstützt, deren Zentrum mit der Schwenkachse (11) des Bremshebels (10,46) zusammenfällt, derart, daß die Länge der Feder (16) beim Verschwenken des Bremshebels (10,46) konstant bleibt und somit auch die Federkraft konstant bleibt.

3. Bremsventil nach Anspruch 2, dadurch gekennzeichnet, daß die kreisbogenförmige Stützfläche (22) der Federcharakteristik der Wagenfedern angepaßt ist, wenn das Bremsventil als lastabhängiges Ventil verwendet wird.

## Claims

1. Brake valve, in particular a driver's brake valve or load-dependent brake valve for controlling the brake line pressure in compressed air brakes, having a manually or load-dependably pivotable brake lever (10, 46), a spring (16) whose force acts proportionally to the brake line pressure, and a lever (20) acting with respect to a control valve (23), the effective lever arm lengths (1₁, 1₂) of which lever can be adjusted by the brake lever (10, 46), wherein on the one hand a valve stem (24) of the control valve (23) and on the other hand the brake lever (10, 46) are supported on said lever (20) so that with the aid of the lever (20) the relatonship between the force (A) of the spring (16) and the force (B) produced by the brake line pressure can be controlled, characterised in that the spring (16) is supported on the lever (20) by means of a roller (18) of the brake lever (10, 46), and by pivoting the brake lever (10, 46) the location of the roller support point on the lever (20) and hence the effective lever arm lengths (1₁, 1₂) can be adjusted.

2. Brake valve according to claim 1, characterised in that the roller (18) is supported on an arcuate support surface (22) of a cam track (19) secured on the lever (20), the centre of which cam track coincides with the pivot axis (11) of the brake lever (10, 46) so that the length of the spring (16) remains constant during pivoting of the brake lever (10, 46) and hence also the spring force remains constant.

3. Brake valve according to claim 2, characterised in that the arcuate support surface (22) is adapted to the spring characteristic of the carriage springs when the brake valve is used as a load-dependent valve.

## Revendications

1. Soupape de frein, en particulier robinet de frein du mécanicien ou soupape de frein, fonction de la charge, pour commander la pression dans la conduite de freins à air comprimé, comportant un levier de frein (10, 46) susceptible d'être basculé manuellement ou en fonction de la charge, un ressort (16) dont la force agit proportionnellement à la pression qui règne dans la conduite de frein, ainsi qu'un levier (20) agissant par rapport à une soupape de contrôle ou de commande (23), et dont les longueurs actives (1₁, 1₂) des bras de levier sont ajustables au moyen dudit levier de frein (10, 46), la réalisation étant telle que sur ledit levier (20) prennent appui, d'une part, un poussoir de soupape (24) de la soupape de commande (23), et , d'autre part, le levier de frein (10,46), de manière qu'à l'aide du levier (20) est réglable le rapport entre la force (A) du ressort (16) et la force (B) provoquée par la pression qui règne dans la conduite de frein, caractérisée par le fait que le ressort (16) prend appui sur le levier (20), par l'intermédiaire d'un galet (18) du levier de frein (10, 46) et que par le basculement du levier de frein (10, 46) est réglable l'emplacement du point d'appui du galet sur le levier (20), et, par suite, les longueurs actives des bras de levier (1₁, 1₂).

2. Soupape de frein selon la revendication 1, caractérisée par le fait que le galet (18) prend appui sur une surface d'appui (22), en forme d'arc de cercle, d'une coulisse (19) fixée au levier (20), et dont le centre coïncide avec l'axe de basculement (11) du levier de frein (10, 46), de manière que la longueur du ressort (16) reste constante, lors du basculement du levier de frein (10, 46), de même que reste constante la force élastique.

3. Soupape de frein selon la revendication 2, caractérisée par le fait que la surface d'appui (22), en forme d'arc de cercle, a la caractéristique des ressorts de voiture, lorsque la soupape de frein est utilisée comme soupape fonction de la charge.
